# EUROPEAN PATENT SPECIFICATION

(11) **EP 0 739 253 B1**
(45) Date of publication and mention of the grant of the patent: **29.03.2000**
(21) Application number: 94925307.4
(22) Date of filing: 16.09.1994
(51) Int. Cl.: B21B 27/00, B21B 1/22, C21D 9/38, B23K 15/08

(54) **METHOD AND DEVICE FOR MANUFACTURING COLD ROLLED METAL SHEETS OR STRIPS, AND METAL SHEETS OR STRIPS OBTAINED**
VERFAHREN UND VORRICHTUNG ZUR HERSTELLUNG VON KALTGEWALZTEN METALLBLECHEN ODER -BÄNDERN, UND DARAUS GEWONNENE METALLBLECHE ODER -BÄNDER
PROCEDE ET MACHINES DE FABRICATION DE TOLES ET BANDES DE METAL LAMINEES A FROID ET PRODUITS RESULTANTS

(30) Priority: 17.09.1993 WO PCT/BE93/00062
(43) Date of publication of application: 30.10.1996
(73) Proprietor: SIDMAR N.V., B-9042 Gent (BE)
(72) Inventor: DE MARE, Carl, 9100 St. Niklaas (BE); DE SOETE, Damien, 9830 St. Martens-Latem (BE); GADEYNE, Yves, 9960 Assenede (BE)
(74) Representative: Van Malderen, Joelle
(86) International application number: BE9400056
(87) International publication number: WO9507775

(56) References cited:
- EP-A- 0 324 327
- WO-A-92/05891
- REVUE DE METALLURGIE, vol.89, no.12, December 1992, PARIS FR pages 1083 - 1091, XP000354223 HAMILIUS ET AL 'Gravure des cylindres de laminage à l' aide d' un faisceau d' électrons' cited in the application
- IRON AND STEEL ENGINEER, vol.68, no.8, August 1991, PITTSBURG USA pages 33 - 38, XP000228090 J.DOLVES 'Electron beam texturing of rolls'
- OPTIK, vol.77, no.2, September 1987, STUTTGART DE pages 83 - 92 W.BOPPEL 'Schnelles Elektronenstrahlgravierverfahren zur Gravur von Metallzylindern'
- STAHL UND EISEN, vol.110, no.3, 14 March 1990, DÜSSELDORF DE pages 55 - 60, XP000135336 R.PANKERT 'Aufrauen von Arbeitswalzen in Kaltwalzwerken' cited in the application
- PATENT ABSTRACTS OF JAPAN vol. 16, no. 287 (M-1271) 25 June 1992 & JP,A,04 075 707 (KAWASAKI) 10 March 1992
- PATENT ABSTRACTS OF JAPAN vol. 15, no. 358 (M-1156) 10 September 1991 & JP,A,03 142 004 (KAWASAKI) 17 June 1991
- PATENT ABSTRACTS OF JAPAN vol. 6, no. 61 (M-123) 20 April 1982 & JP,A,57 004 311 (HITACHI) 9 January 1982
- PATENT ABSTRACTS OF JAPAN vol. 13, no. 48 (M-793) 3 February 1989 & JP,A,63 256 207 (NIPPON STEEL CORP.) 24 October 1988

## Description

### Object of the invention.

The present invention relates to a method and a device for manufacturing cold rolled metal sheets or strips, through a cold reduction operation in a rolling mill.

The present invention relates also to metal sheets or strips obtained through cold reduction mills preferably by using the method and the device of the present invention.

### State of the art.

The cold rolling process consists essentially in pulling off the strip coming from the hot rolling mill to a cold reduction mill.

The cold reduction mill has the purpose to reduce the total thickness of the metal sheet or strip to a rate usually comprised between 50 and 90%. This operation is performed in several steps and at least in three steps. Such cold reduction can be performed in one stand using a reversible mill or in several stands using a reduction mill called 'tandem mill' and wherein the several reduction steps are done in one sequence.

The cold rolled sheet or strip is then heated up in a furnace, this process is known as annealing process. Afterwards, the annealed sheet or strip passes through a second cold roll mill called 'skin pass' or 'temper mill' in order to undergo a small cold deformation for improving mechanical properties and surface qualities of the metal sheet or strip.

During a cold reduction operation, the pressure applied to the rolls is higher than 10kN/mm and the tension between two reduction steps is ca 200 Pa, while during a temper rolling operation the normal pressure is less than 5 kN/mm and the tension between two reduction steps is ca 25MPa.

The physical properties of the metal sheet after a rolling operation in a reduction mill are completely different compared to the properties of the material after a skin pass or temper rolling operation.

Summarized hereunder are the main properties of the metal sheets or strips:

| | Reduction operation | Skin pass operation |
|---|---|---|
| Rockwell B hardness (Euronorm A11-106 and A11-108) | min 80 (full hard) | 30 to 60 |
| Bend test (Euronorm 117-02) | no bending in either direction | bend flat on itself in any direction |
| Yield Strength (Euronorm EN10002-1) | 550 to 750 MPa | 130 to 240 MPa |
| Elongation in 50 mm (Euronorm EN10002-1 or ASTME8M) | < 10 % | 30 to 50 % |

It is a common practice in cold rolling devices to apply a certain roughness to the work rolls, preferably for the last step of the rolling operation in a cold reduction mill or for the only stand of a temper mill.

In the case of a cold reduction reversible mill, the mill work rolls are changed before the last step of the reduction operation for textured work rolls, and in the case of a tandem mill, only the last stand comprises textured work rolls.

To give such roughness to work rolls, several texturing technologies are known and are summarized in "Stahl und Eisen, Vol. 110 (1990), 14 March, No. 3, Dusseldorf, DE".

### 1°) Shot Blast Texturing (SBT).

Iron particles (grit) with a specific granulometry are sprayed on the surface of a work roll. The kinetic energy of the particles is sufficient to deform the surface plastically. The work roll roughness is function of the grit (angularity, mass, size), the velocity of rotation of the work roll, the hardness of the roll material, the number of passes along the roll and the rotating speed of the roll.

With SBT technology, roughness values (Ra) on the work roll comprised between 1.5 µm and 6.0 µm can be obtained.

The roughness profile shows a random distribution of peaks and valleys. No regular pattern can be distinguished.

Although SBT has a high productivity, this technology has major drawbacks :
- It is difficult to reproduce the work roll roughness. Therefore the Ra value obtained on the roll after texturing shows a large scatter band.
- Very high roughness values (Ra > 5 µm) can only be obtained with relatively softer rolls (hardness lower than 90 Shore C). Such rolls have only a shortlive service time.
- The sharp edges of the roughness break off rapidly so that the wear of the work rolls during a rolling campaign is always important.
- The roughness parameters can not be chosen independently from each other. So there is a relationship between the roughness value (Ra) and the number of peaks/cm value (Pc) measured on the sheet.

Until now most of textured rolls for a cold reduction mill are textured with this technique.

### 2°) Electrical Discharge texturing (EDT).

An anode, separated from a copper electrode (cathode) by a dielectric medium, causes an electric discharge which is able to produce craters or indentations on the roll surface.

Actually to each anode, several cathodes are coupled and since the cathodes spark independently from one another, the crater morphology due to the spark from a single electrode is rapidly destroyed due to the overlap of the multiple discharges from adjacent electrodes. This leads to a surface roughness which is substantially random. The randomness is more pronounced as the number of passes is increased.

The roll roughness is function of the voltage frequency (higher frequency leads to higher peak counts), the voltage applied to the electrodes (positive voltage results in rougher surface than negative voltage) and the level of capacitance in the electronics.

Compared to the Shot Blast system, EDT is not significantly dependent upon the hardness of the work roll. The low roughness texture produces a higher number of peaks/cm and the reproducibility is better.

The EDT system has also some important drawbacks:
- to produce high roll roughness, a high current density is necessary. This causes extensive heating of the roll material with can result in structural changes of the roll material.
- to produce low roll roughness a high number of passes of the electrode manifolds are necessary to destroy the initial craters. Therefore the texturing time increases as the Ra decreases.
- a roughness with sharp cutting edges is produced which can micro machine the sheet surface leading to unwanted wear debris generation.
- the roughness value (Ra) and the number of peaks per cm value (PC) can not be chosen independently of each other. There is an exponential relationship between Ra and PC for EDT as for SBT. However the PC value is 30 to 50% higher for EDT compared to SBT.
- an initial waviness of the roll surface can occur. As the gap between roll and electrode is larger in the waviness troughs, the sparking is imperfect in the troughs and adequate on the crests in the waviness profile. As the texture depends upon the initial height of the surface, the initial waviness leads also to Moiré fringes on the roll.

This texturing technique is not frequently used for texturing rolls for a cold reduction mill due to the important wear of the roll in such case.

### 3°) Laser Texturing (LT).

A laser beam hits the roll surface in order to melt the roll material and to blow the material out of the crater with an assisting gas (O₂, CO₂ or Ar). The final roll texture corresponds with a uniform distribution of craters along a helical path on the work roll circumference. The axial crater distance is controlled by the speed of the longitudinal movement of the roll. In the tangential direction, the crater distance is determined both by the speed of the roll and the speed of the mechanical chopper. The crater depth is determined by the laser power. The shape of the crater tends to become more and more elliptical as the shot time is increased due to the fact that the laser beam is not deflected during the shot so that the beam spot on the roll is moving.

The laser technology introduced the so-called deterministic roughness in one direction. However, it has itself important drawbacks :
- due to the mechanical chopper of the beam which put severe constraints on the texturing capabilities, only a limited variation in textures is possible.
- the crater rim is composed of partly oxidised material and the brittleness of the rim causes it to break during rolling, giving rise to a rapid decrease in roll roughness
- the texture is only deterministic in the direction of the helical path and at present is not possible to obtain a fully deterministic pattern (due to the position of each crater with the mechanical chopper).
- There is an irregularity of the rim due to the use of a lateral gas and to the fact that pre- and post-heatings of the roll surface are not possible.

It should be noted that the laser technology is practically not used for texturing rolls for a cold reduction mill because of the important wear of the work roll (oxydation of the rim) and because of a moiré problem which especially occur in the case of a cold reduction mill.

### 4°) Electron Beam Texturing (EBT).

The application of a special electron beam technology for texturing rolls was initially developed for the engraving of rotogravure printing cylinders by Linotype Hell (see WO-A-9205891, WO-A-9205911, WO-A-9210327).

This method consists in bombarding an electron beam on a surface roll. During a single shot, lenses focus the beam to preheat the roll material, then to bombard the surface with a first shot in order to create a crater and to post heat the rim surrounding the crater. This cycle can be done two or three times on the same spot to create deeper craters. During the shot cycle, the beam is deflected to compensate the continuous movement of the roll surface (shift and rotation). In this way perfectly round crater rims are obtained.

The very fast electronic pulsation of the beam controls the position of each crater in order to create a two dimensional pattern. Some examples of patterns are shown in document "La Revue de Métallurgie - CIT - Décembre 1992 dans "Gravure des Cylindres" par A. Hamilius et al.".

The lenses permit also an accurate control of the diameter of the beam and of the shot time. These two parameters are directly linked to the diameter and the depth of the crater on the surface roll. By changing the diameter on crater distance, deterministic (comprising semi random or pseudo random) textures are obtained.

This technology is only used until now for texturing work rolls for 'skin pass' or 'temper devices' using one EBT pilot plant. The two main advantages mentioned in this document "La Revue de Métallurgie - CIT" are the paint appearance on the metal sheet obtained after temper rolling as well as its drawability improved.

### Aim of the invention.

The main aim of the present invention is to propose an improved method and an improved device for manufacturing metal sheets or strips having better properties.

### Main characteristics of the present invention

The present invention related to a method of producing metal sheets or strips by cold reduction of a metal sheet or strip in a tandem mill or a reversible mill with at least one pair of work rolls, at least one of which being a textured work roll in order to transfer the surface pattern of the textured work roll to the surface of said sheet or strip, and wherein said pattern of the textured work roll consists in a bidimensional deterministic pattern of spots obtained through a high energy beam such as an electron beam wherein each spot has the form of a crater with a controllable rim around it, said spot being defined by the ratio width on height of the rim higher than 2, the distance between next two craters comprised between 50 and 500 µm, the inside diameter of the crater comprised between 20 and 250 µm, and the roughness of the textured work roll in the cold reduction mill comprised between 0.4 and 8.0 µm.

The roughness of the textured work roll in the cold reduction mill is comprised preferably between 1.0 and 3.5 µm, although the sheet roughness performed with the process according to the present invention is preferably in the range of 0.5 - 2.0 µm.

More particularly, the ratio width on height of the rim is preferably at least 3 and the ratio crater diameter on crater depth is larger than 4.

The distance between two next craters is comprised preferably between 130 and 320 µm with a depth comprised preferably between 8 and 30 µm.

The inside diameter of the crater is comprised preferably between 50 and 180 µm although the width of the rim is in the range of 4 - 100 µm and preferably in the range of 10 - 75 µm, and the height of the rim is in the range of 2 - 50 µm and preferably in the range of 5 - 35 µm.

According to a preferred embodiment of the method of the present invention, the metal sheet or strip, after the cold reduction rolling operation as mentioned hereabove, is temper rolling with at least one pair of work rolls, at least one of which being a textured work roll in order to transfer the surface pattern of the textured work roll to the surface of said sheet or strip, said pattern of the textured work roll in the temper mill consisting in a bidimensional deterministic pattern of spots wherein each spot has the form of a crater with a rim around it. Preferably, said spots are obtained through a high energy beam such as an electron beam.

The roughness of the textured work roll in the temper mill is comprised between 0.4 and 8.0 µm and preferably between 1.6 and 6.0 µm although the sheet roughness performed with this last embodiment of the present invention is in the range of 0.5 - 6.0 µm and preferably in the range of 0.8 - 4.0 µm.

Preferably, the metal sheet or strip which was textured on one side in the cold reduction mill should be textured on the same side by a textured work roll in the temper mill.

If the metal sheet or strip is not reversed between the cold reduction and the temper rolling phases, this means that the upper and/or lower work roll of the pair of work rolls in the temper mill should correspond to the textured upper and/or lower work roll of the pair of work rolls in the cold reduction mill.

According to another preferred embodiment of the method of the present invention, both rolls of the pair of work rolls in the cold reduction mill and/or in the temper mill have a texture of surface pattern which consists in a bidimensional deterministic pattern of spots.

Preferably, the cold reduction or temper mill textured rolls are engraved with the "EBT process" by an electron beam under vacuum. By this technique, over a few square microns, an electron beam brings the roll surface to melting temperature and, under plasma pressure, the molten metal is ejected and forms around the crater a controllable and defined rim integrated within the base metal. The shape and the size of the rim are controlled by pre- and post-heating periods of the electron beam irradiation.

The texture of the work roll is reproduced on metal sheets or strips during the rolling process in the cold reduction mill or in the temper mill.

Preferably, the pattern configuration forms unit cells such as regular centred hexagons.

The present invention relates also to a device for producing metal sheets or strips by cold reduction rolling comprising at least a tandem or reversible roll mill with at least one pair of work rolls, characterised in that at least one roll of the pair of work rolls in the tandem or reversible mill has a texture of surface pattern which consists in a bidimensional deterministic pattern of spots obtained through a high energy beam such as an electron beam, wherein each spot has the form of a crater with a rim around it, said spot being defined by the ration width on height of the rim higher than 2, the distance between next two craters comprised between 50 and 500 µm, the inside diameter of the crater comprised between 20 and 250 µm, and the roughness of the textured work roll in the cold reduction mill comprised between 0.4 and 8.0 µm.

According to a preferred embodiment, the cold reduction rolling mill is a reversible mill comprising only one stand of work rolls performing several steps or a reduction operation. In such a case, the work rolls are changed before the last step of the rolling operation in textured work rolls having a texture of surface pattern which consists in a bidimensional deterministic pattern of spots.

According to another preferred embodiment of the invention, the cold reduction rolling mill is a tandem mill comprising several stands and wherein only the last stand comprises at least one textured work roll having a texture of surface pattern which consists in a bidimensional deterministic pattern of spots. The reduction operation is performed in one sequence.

According to another preferred embodiment of the present invention, the device comprises also a temper roll mill with at least one pair of work rolls wherein at least one roll of the pair of the work rolls in the temper mill has a texture of surface pattern which consists in a bidimensional deterministic pattern of spots wherein each spot has a form of a crater with a rim around it.

According to another preferred embodiment of the device of the present invention, both work rolls of the pair of work rolls in the cold reduction mill and/or in the temper mill have a texture of surface pattern which is a bidimensional deterministic pattern of spots.

The present invention also relates to a metal sheet or strip obtained by the method or the device mentioned above and having a texture of surface pattern which consists in a bidimensional deterministic pattern of spots, each spot having the form of an indentation surrounding a protuberance or peak, and wherein high wavelengths (waviness) are practically absent from the power spectrum.

This means that for a power spectrum measured on a profile of 40 mm, the main power density for wavelengths larger than 800 µm is less than 0.2 µm² and preferably less than 0.1 µm².

Preferably, the metal sheet or strip showns an elongation (in 50 mm) less than 10% (Euronorm EN10002-1).

In the case that the metal or strip is of steel, the hardness of the sheet or strip is higher than 80 (Rockwell).

As already mentioned, the roughness of the metal sheet or strip is comprised between 0.3 and 2.5 µm and preferably between 0.5 and 2.0 µm.

More particularly, the ratio width on depth of the indentation on the sheet or strip is at least 2 and preferably at least 3 and the ratio protuberance diameter on protuberance height is larger than 3 and preferably larger than 4.

The distance between two next protuberances or peaks is comprised between 50 µm and 550 µm and preferably between 130 and 320 µm with a height of the protuberance comprised between 0 µm and 30 µm.

The inside diameter of the indentation is comprised between 20 µm and 250 µm and preferably between 50 µm and 180 µm although the width of the indentation is in the range of 4-100 µm and preferably in the range of 10-75 µm and the depth of the indentation is in the range of 0-50 µm and preferably in the range of 5-30 µm.

According to a first embodiment, the surface texture of the metal sheet or strip shows imprints (indentation) of the rim present on the textured roll. In this case, the presence of protuberances or peaks for which a material of the sheet or strip has been extruded into the crater of the textured roll can (height of the protuberance not equal to 0) or cannot (height of the protuberance close to 0) occur depending on the thickness reduction.

According to another embodiment, the surface texture of the metal sheet or strip shows only protuberances or peaks almost without any imprints (indentation) of the rim present on the textured roll. In this case, the depth of indentation is close to 0 µm and has a very large width.

Preferably, the pattern configuration forms unit cells such as a regular centred hexagons.

The above-mentioned characteristics are related to a metal sheet or strip which is an intermediate product and which has not yet been subjected to an annealing process and to a subsequent temper rolling operation.

The present invention also relates to a final product which has been rolled in the cold reduction mill with EBT rolls, and has been subjected to an annealing process and possibly to a subsequent temper rolling operation.

If the metal sheet or strip as described hereabove has been subjected to an annealing process without any temper rolling operation, it will not have any internal tension at the surface.

This last property can be checked using one of the following techniques: x-ray diffactometry, ultrasonic measurement, measure of the microdeformation during an etching of the surface layer, microhardness.

If the temper rolling is performed with a SBT or EDT textured roll, a stochastic roughness is covering partially the bidimensional deterministic pattern of spots on the metal sheet or strip.

If the temper rolling operation has been performed with a laser textured roll, a uni-deterministic roughness is covering partially the bidimensional deterministic pattern of spots on the metal sheet.

If the temper rolling operation has been performed with an EBT textured roll, the metal sheet or strip has a final texture of two populations of texture surface pattern which consists in a bidimensional deterministic pattern of spots.

Such metal sheets or strips can be made of steel, stainless steel , aluminum or aluminum alloys.

Such metal sheets or strips can also be coated with metallic or organic layer such as painting, galvanizing, aluminization...

### Brief description of the figures.

- - Figure 1: represents a steel sheet production flow.
- - Figure 2: represents a schematic view of the decomposition of the surface profile for a metal sheet in roughness and waviness.
- - Figures 3 & 4: represent the relationship between roughness and waviness for random texturing processes (SBT) in the case of a low roughness (Fig. 3) and in the case of a high roughness (Fig. 4).
- - Figure 5: represents the evolution of the roughness and the waviness during an EDT of a roll.
- - Figures 6 & 7: represent the transfer of waviness during the cold reduction rolling (Fig. 6) and the additional roughness transfer in the temper mill (Fig. 7).
- - Figures 8 & 9: represent the sheet surface after cold reduction rolling with SBT rolls, followed by temper rolling with EBT rolls.
- - Figure 10: represents the relationship between the waviness of a metal sheet and the image clarity after painting.
- - Figure 11: represents the influence of the sheet when the temper mill method is LT or SBT on the paint image clarity.
- - Figure 12: is a schematic view of the EBT machine which is intended to texture cold rolls used in the method and the device of the present invention.
- - Figure 13: is a schematic view of the electron beam gun of the machine of Figure 12.
- - Figures 14,15 & 16: represent a schematic view for three examples of deterministic EBT texture (two dimensional crater patterns).
- - Figure 17: represents a schematic view of an example for a circular crater shape obtained by EBT.
- - Figures 18 & 19: represent a view wherein metal sheet has been obtained after tandem rolling and after temper rolling.
- - Figures 20 & 21: represent three dimensional measurements of a textured work roll in a tandem mill and a tandem mill rolled strip according to the present invention.
- - Figure 22: is a diagram wherein Ra evolution of the EBT textured roll in the tandem mill is represented during a single rolling schedule.
- - Figure 23: represents the behaviour of the pick up of iron fine on an EBT textured roll.
- - Figure 24: represents the weight loss (WL) of the coating during drawing of galvanized matter.
- - Figure 25: represents the influence of the cold reduction texture process (SET and EBT) on the variation of the coating thickness (CT).
- - Figures 26 & 27: represent the resulting final texture of a metal sheet or strip after having been successively tandem and temper rolled and wherein a controlled mixture of shallow and deep circular valleys appears for coarse roughness (Fig. 26) and fine roughness (Fig. 27).

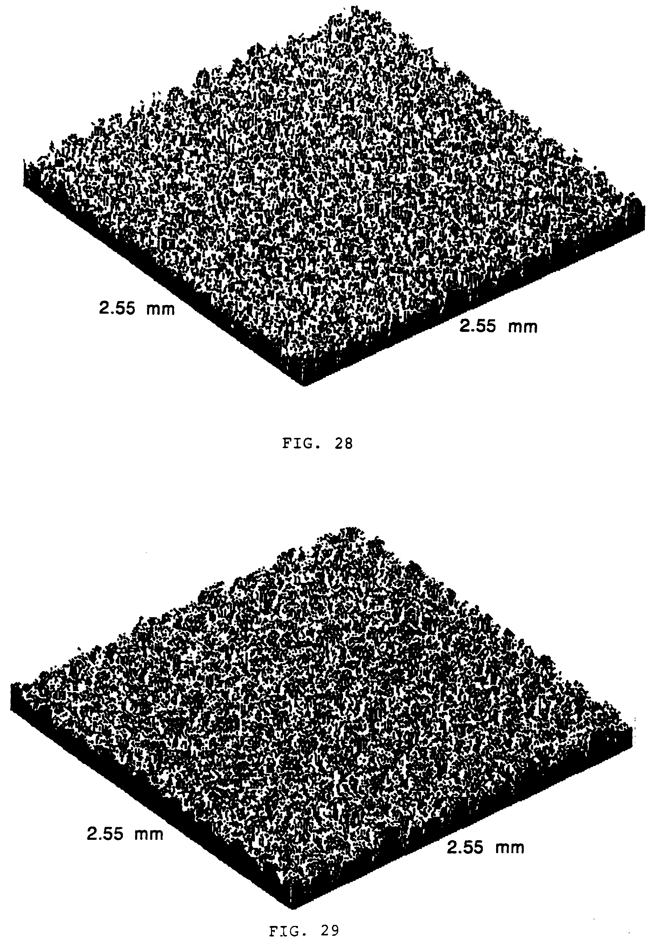

- - Figures 28 & 29: represent two views of three-dimensional texture measurements of a temper rolled strip with a fine (Fig. 28) and a coarse (Fig. 29) deterministic EBT texture.
- - Figures 30 & 31: represent the wavelength spectrum for a sheet or strip having been successively tandem and temper rolled in the case of using shot blasting (Fig. 30) and EBT (Fig. 31) textures respectively.
- - Figure 32: represents the paint appearance for a sheet where stochastic roughness is used during cold reduction (EBT, LT) and for a sheet where EBT is used.

### Problems to be solved by the present invention.

The roughness of the work rolls used in the last step of a rolling operation in a cold reduction mill causes three major consequences :
1°) Avoiding cold welding (sticking) of the coil spires during the batch annealing. During the batch annealing, the outer spires of the coil are heated faster than the inner. The temperature gradient causes thermal pressure between the spires. The pressure becomes so large that the spires weld together. Such a welding is called a "sticking". During decoiling before temper rolling, stickers break but leave a mark on the sheet surface. This defect is called "sticker marks". The surface roughness reduces the tendency to form stickers during batch annealing.
2°) Ascertaining adhesion of a coating on a steel substrate (hot deep galvanizing and galvannealing). In a hot dip galvanizing line, the full hard material (steel sheet obtained after tandem rolling) is first annealed in a continuous annealing line and then dipped in a Zinc bath at 470 °C. The roughness of the sheet is important to pick up the Zinc. Minimal roughness values comprised between 0,8 µm and 1,2 µm are required depending on the specification of the Zn thickness.
3°) Giving rise to a final roughness after temper rolling, which is a mixture between the reduction mill roughness and the subsequent temper mill roughness. For certain applications, as bathtubs, extreme high roughness of metal sheets are necessary (Ra > 3,5 µm). Such high values can not be obtained only by temper rolling. Therefore a high surface roughness after a cold reduction rolling is also required.

Furthermore, the high hardness of metal sheets or strips in the case of steel or stainless steel sheets or strips obtained by a rolling operation in a cold reduction mill and the thickness reduction of 5 to 10% during the last step of the rolling operation cause specific problems which are unknown in the case of the temper rolling mill.

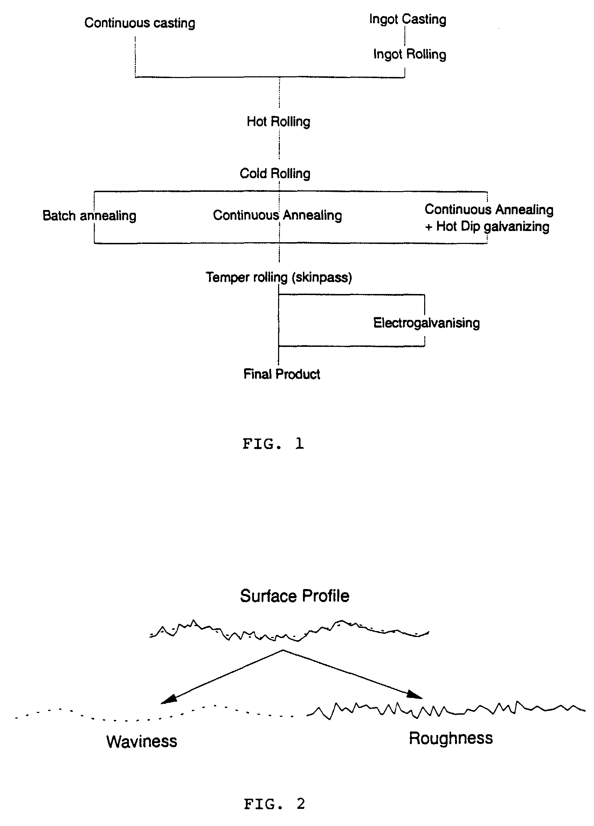

Using random texturing methods such as SBT or EDT for texturing work rolls, the presence of long wavelength undulations, the so-called "weaviness", is observed (see figure 2).

The waviness produced during said texturing methods is due to :
- random variation in roll hardness, variation of the energies of the shot blast particles in the case of a SBT technology;
- variation in the electric energy of the eroding spark, variation in the electric conductivity of the roll material in the case of an EDT technology.

For a same roughness value, the waviness of SBT or EDT textured rolls are not significantly different. Tests with different grinding procedures showed that the waviness of the strip after cold rolling can not be reduced by lowering the roughness of the ground roll prior to EDT.

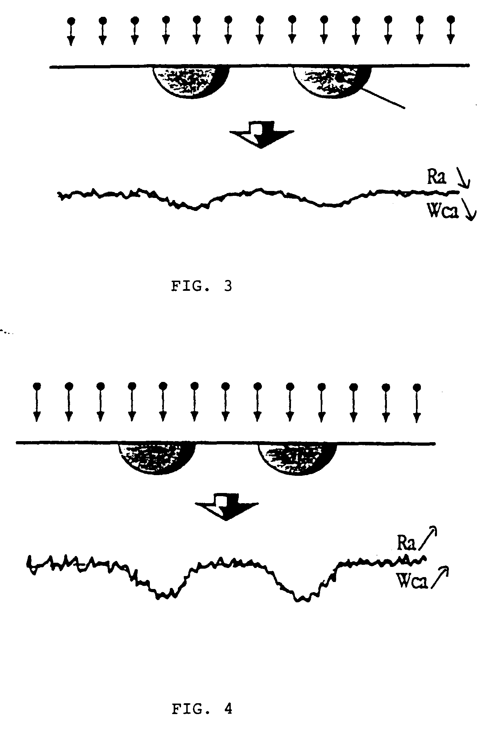

Computer simulations of the SBT process show that any attempt to increase the roughness of the roll will increase the waviness (see figures 3 and 4).

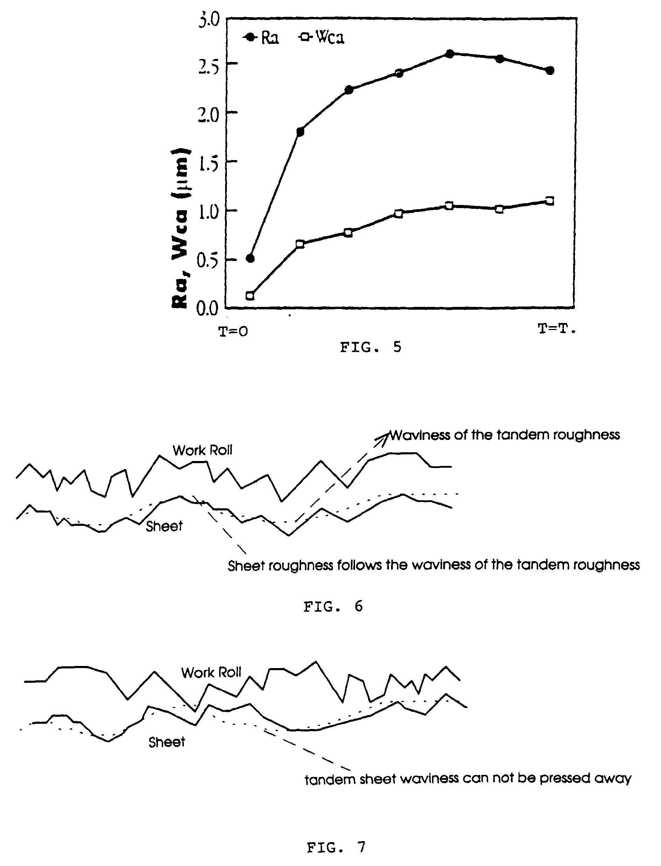

A same relationship between the roughness (Ra) and the waviness (Wa) values is found on the EDT rolls. Figure 5 shows the Ra and Wa values for the EDT roll as a function of the texturing time or the degree of texturing. As the degree of texturing increases, both Ra and Wa increase.

These results indicate that waviness is introduced during texturing as a direct consequence of efforts to make the roll rougher. The inherent variability of the SBT and EDT methods is responsible for the random nature of the resulting texture, and also for introducing a wide range of topographic wavelengths on the roll surface.

The waviness of the roll surface is transferred to the sheet roughness easier during the cold reduction operation than during temper rolling. The higher pressures (due to harder sheet and larger thickness reduction) and the longer contact between sheet and roll (due to larger thickness reduction) make that even the long wavelength undulations in the roll are imprinted on the sheet surface.

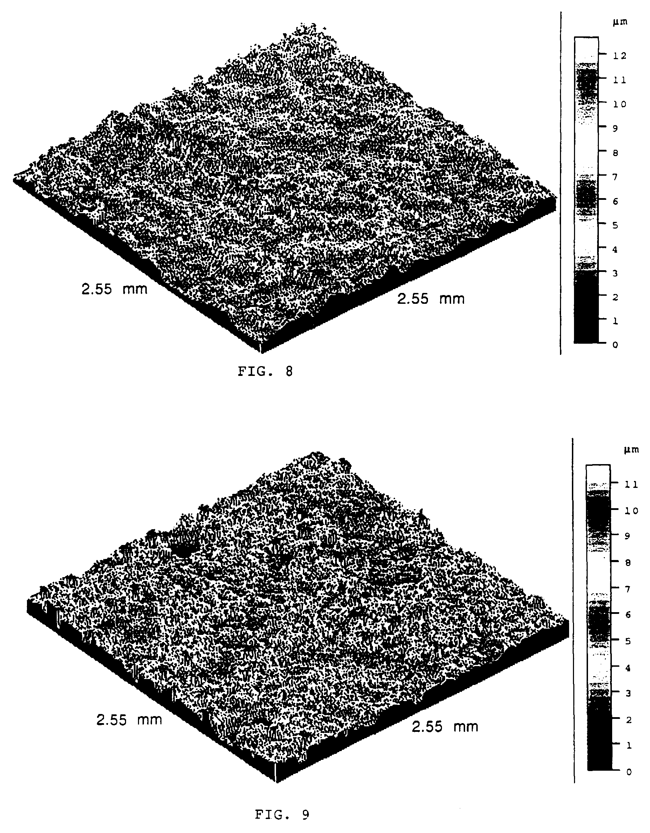

However, to avoid sticker marks after batch annealing, the Ra-value of the cold reduction mill roughness needs to be high. Therefore, shot blast or EDT rolls with high Ra-value (5 to 6 µm) and unfortunately high Wa, are used. This results in a high waviness after cold rolling. As the thickness reduction in the temper mill is small (0.5 to 1.0 %), the cold reduction waviness can not be ironed out and remains present in the final roughness (see figures 6 and 7).

Even if during temper rolling EBT or LT textured rolls are used, the final surface contains the waviness of the cold reduction rolls (see figures 8 and 9).

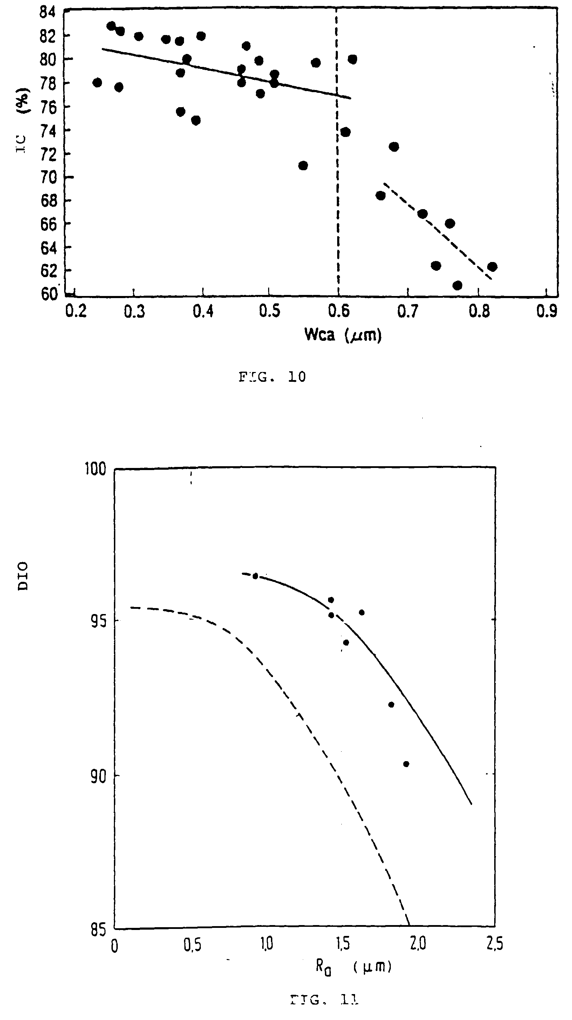

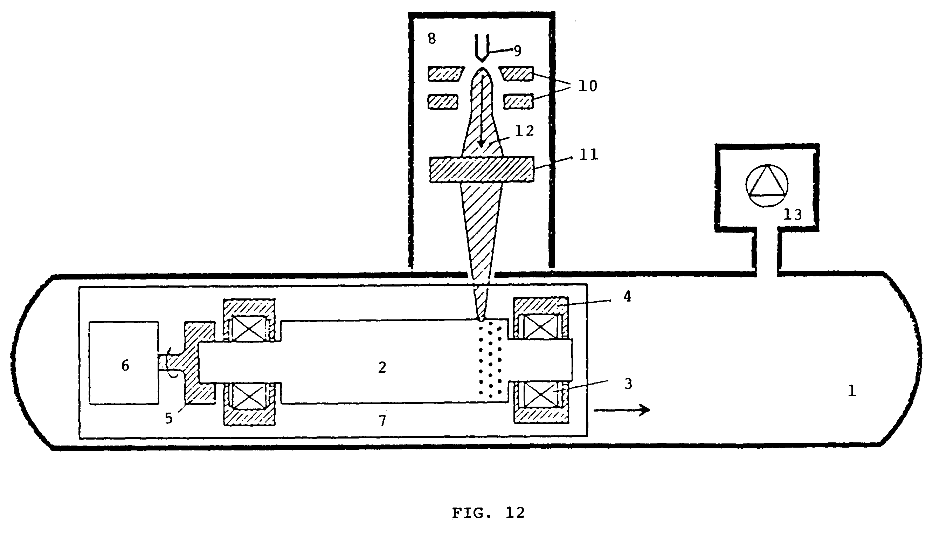

The waviness is detrimental for the appearance of painted parts, as shown in figures 10 and 11.

Another problem of the present invention is the important wear of the textured rolls used in the cold reduction mill and obtained by the conventional methods. The wear is due to the high shearing forces during cold reduction rolling, which results in the large thickness reduction of the sheet or strip and a high hardness of the material in the case of steel sheet. This is definitely the case for EDT rolls, due to the fine and sharp edges.

Another problem of the present invention is to reduce the pick up of iron fine, especially when low roughness SBT and EDT rolls is produced. The iron fines, present in the emulsion of the cold reduction mill, will stick on to the work roll when the peaks of the roll roughness are sharp. The work roll and backup roll are then damaged and the rolling process must be stopped.

For this reason, the present tendency is to try to produce a lower tandem roughness without jeopardizing the batch annealing and the coating adhesion. With classical roughing techniques, this effort is however limited due to the irregular character (waviness) of the applied roughness.

### Detailed description of the present invention

Figure 12 describes an EBT machine which is intended to produce specific textures on cold rolls to be used in the method and the device of the present invention.

In general, one can compare the EBT machine to a highly energetic TV set, wherein the screen has been replaced by the roll surface to be textured. From this, the main advantages are:
- flexibility
- reproducibility
- predictability
- productivity
- reliability
- full automation.

The EBT machine is essentially composed of the following parts:
- the texturing chamber (1);
- the electron gun (8);
- the vacuum pump (13);
- the closed circuit heat exchanger (not represented)
- the electrical control cabinets (not represented).

The texturing chamber (1) consists of a cast steel base and aluminum cover, giving rise to an airtight unit. The cover has a movable lid on the top, in order to enable the loading and unloading of the rolls (2). During texturing the vacuum in the chamber (1) is kept constant at 10⁻¹ mbar. The roll is rotated by means (3, 4, 5) of a continuously variable speed drive motor (6) between 0 and 1000 rpm, whereas a shifting mechanism (7) takes care of the translation of the roll (2) in front of the fixed position of the electron gun (8). From the moment a texture is chosen and the roll (2) is introduced into the texturing chamber (1), the machine set-up and the texturing process is performed automatically. The EBT machine is controlled by means of five microprocessors which are linked to each other and to the central control PC via a LAN (Local Area Networks) system, which is executed with fiber optics in order to avoid unwanted noise.

The principal part of the EBT machine is the electron gun (8) which is rigidly attached to the backside of the texturing chamber (1). As represented in figure 2, the electron beam gun (8) is composed of three parts:
- the accelerator unit (10) with the cathode (9)
- the zoom lens unit (11)
- the focusing unit (11)

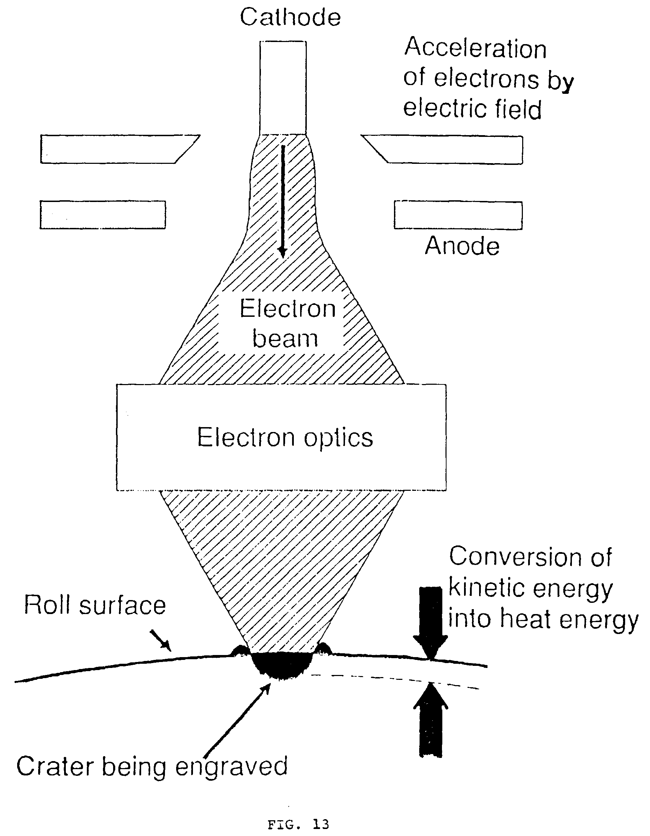

The electron gun can be described as a classical triode, equipped however with fast pulsing and zoom lens optics, which make it unique. The crater and rim forming process is schematically represented in Figure 13. The gun operates under a vacuum of 10⁻³ to 10⁻⁴ mbar and uses an accelerating voltage of 200 kV at a maximum current of 75 mA. A direct heated cathode produces the electrons. The pulse frequency of the gun is continuously variable, with a maximum of 200 kHz. The shot cycles for the formation of a single crater, which can be performed in single or double shot, is represented as follows:

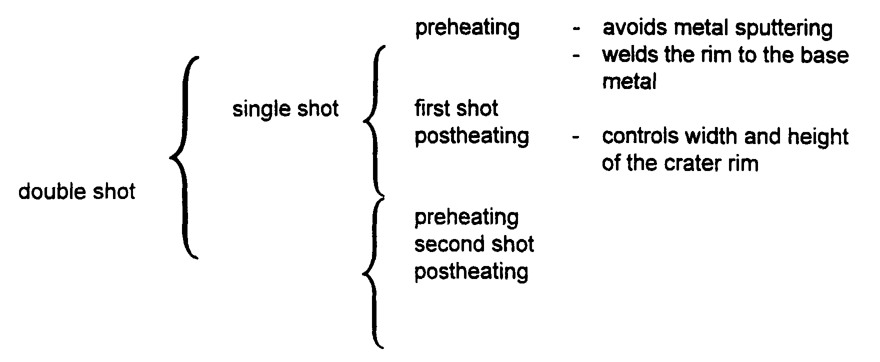

The total shot cycle time per crater (first and possible second shot) is in the range of 2 to 15 µsec.

The electron beam is deflected in order to follow the translation and rotation of the roll during a crater formation. In this way, the whole roll surface is textured with perfectly circular craters. The shift speed is continuously variable from 0.03 to 0.36 m/min. The shift speed is controlled by the shift and rotation speed of the roll, monitored by decoders, which in turn control the timing of the impact of the electron beam.

The roll texture is formed by a two-dimensional deterministic pattern of craters, generated by a high energy beam (i.e. an electron beam), each crater being surrounded by a crater rim.

The two-dimensional pattern has a constant structure and is defined by three parameters : dL, dA and n.
- dL is the distance between two craters measured in the circumferencial direction of the roll
- dA is the distance between two circumferences in the axial direction
- n is the number of windings on the roll before the crater has the same circumferencial position on the roll, n can be an integer or a real number (that is not equal to a fraction of two integers)

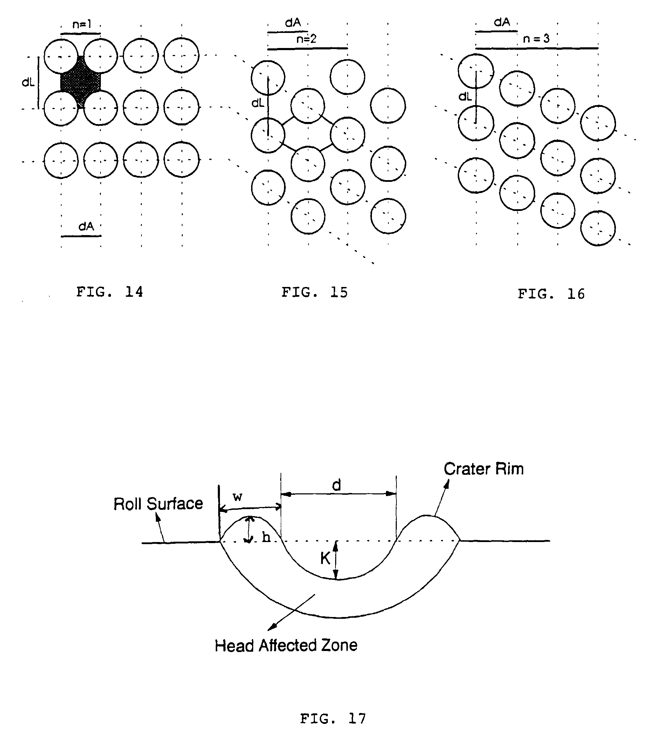

Some examples of unit cells are given in figures 14, 15 and 16.

The pattern of Fig. 14 has a rectangular unit cell: the craters have the same position in each winding of the helix.

The pattern of Fig. 15 has a hexagonal unit cell: after two windings of the helix the crater is placed in the same position in the axial.

In the pattern of Fig. 16, after three windings the crater has the same circumferencial position.

The distances dL and dA can be chosen in a wide range : between 80 and 550 µm. The number n is an integer larger or equal to 1 (no limitation to the maximum). For every prime number or a real number, a different pattern is found. When n is a fraction or an integer larger than the number of windings on the roll (typically ca 20000), there is almost no periodicity in the pattern in the axial direction. This method permits to create a pseudo random ordering of the craters in the axial direction.

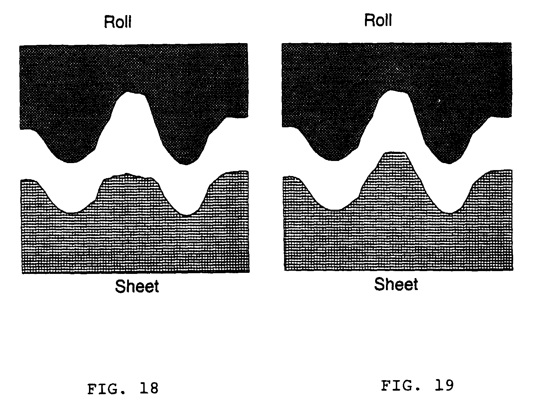

The shape of the crater is function of the beam diameter d, the shot time ts and the deflection of the beam during the shot. When the beam follows the roll surface during the shot, perfect circular craters can be created with a crater depth K proportional to the shot time ts (see Fig. 17).

When there is no deflection or a negative deflection (deflection is opposite direction of the roll surface), then more or less elliptical craters are obtained.

The shape of the crater rim is affected by the pre- and post heating, by the energy distribution over the beam radius, the position and the relation between crater diameter and the crater pattern. A round circular rim with smooth edges is generated when the crater diameter is small compared to the distance between two craters and when the post heating is long.

By increasing the preheating and decreasing the post heating a more and more irregular rim can be formed.

A discontinuous rim, composed by several heaps of roll material, can be found when the crater diameter is approximately 80% of the distance between two craters. The shape of the heaps and the number of heaps per crater is function of the parameters dL, dA and n.

The transfer of the roughness from the textured work roll to the sheet is totally different in the cold reduction mill compared to the temper mill. In the temper mill, the sheet roughness is created by the imprint of the rim in the sheet (see Fig. 18).

In the cold reduction mill, the surface of the sheet contains not only the imprints of the rim but also peaks or protuberance where the material has been extruded into the crater depth, due to the high shearing forces. So the crater depth influences directly the roughness after the cold reduction step (see Fig. 19).

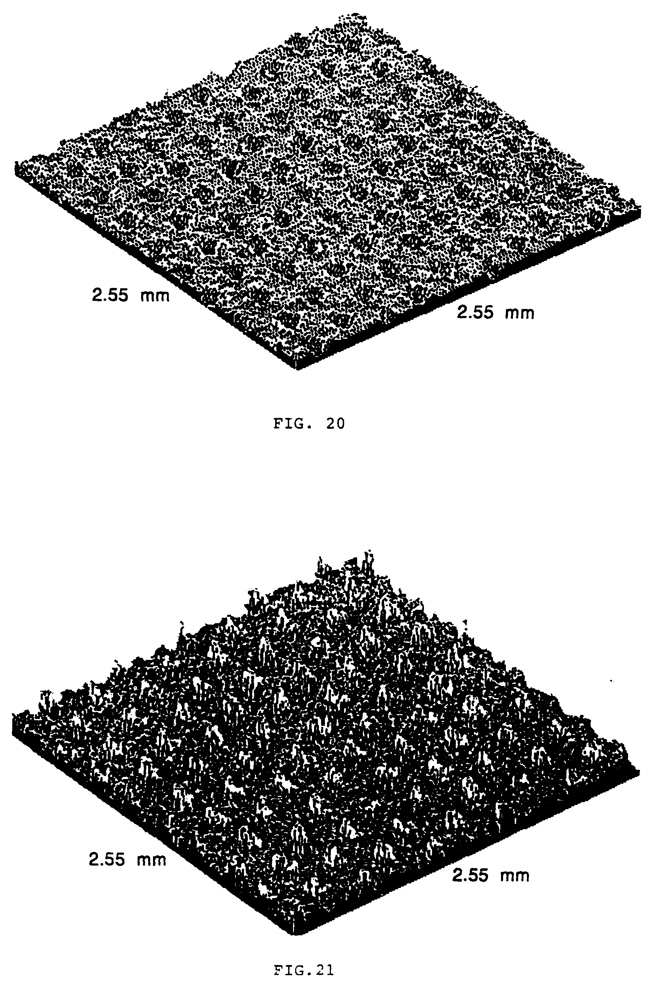

Illustrations of the sheet roughness, after cold reduction rolling with deterministic EBT roughness or after temper rolling with EBT roughness, are given in Figs. 20 and 21.

However, the presence of high protuberancy or peaks due to material having been extruded in the corresponding crater of the roll can or cannot occur, depending on the thickness reduction of the sheet or strip.

### Solution to the wear of the textured work roll during cold reduction rolling.

The roll wear during cold reduction rolling is strongly affected by the shape of the rim or the discontinuous peaks on the roll. The ratio width on height of the heaps of the rim on the roll should be at least 3. Otherwise the stresses generated in the heap by the shearing forces are too large and the peak breaks off.

For a round conical rim (with rounded tip), this condition can be realised by following shoot parameters :
- beam focus point under the roll surface
- ratio of crater diameter on crater depth larger than 4.

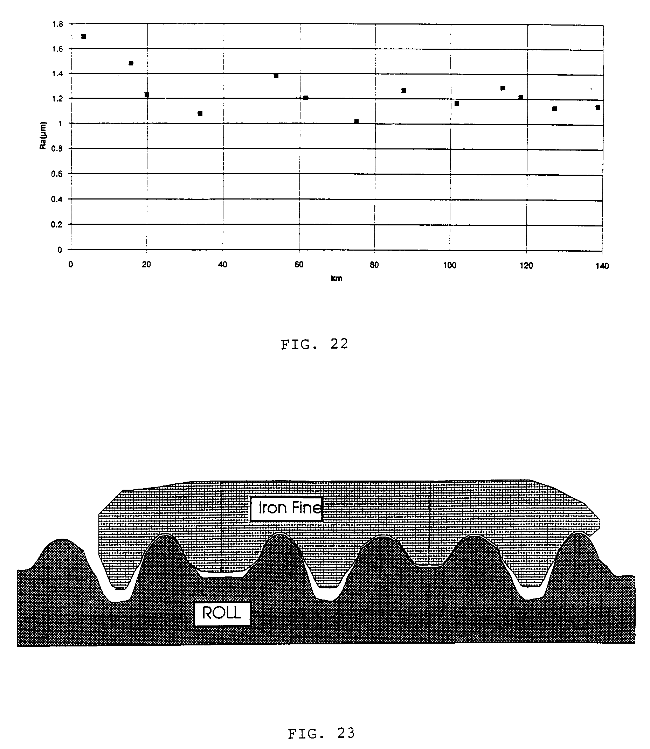

Figure 22 shows the evolution of Ra during a cold reduction rolling campaign with such a rim shape.

There is a small drop in Ra during the first part of the campaign. After 20 km the roll roughness is stable and there is practically no wear.

A further reduction of the wear has been found by changing the rim shape. It was found that by using a focus point of the beam above the roll surface instead of under the roll surface, the rim shape changes from conical with rounded tip to a more trapezoidal shape. The ratio width on height of the trapezium rim should be at least 2 to minimise the wear.

### Solution to the problem of pick up of iron fines during reduction rolling

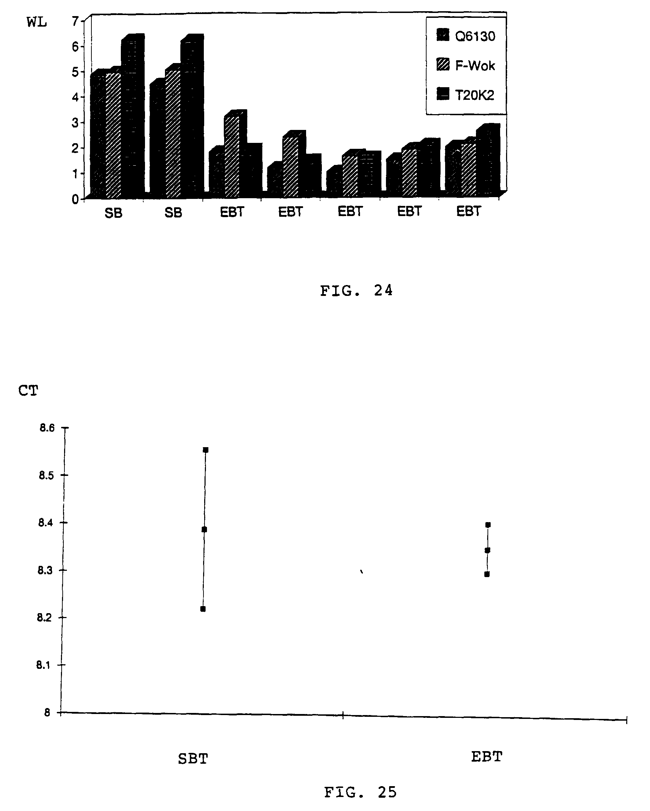

Pick up of iron fines on the EBT textured rolls happens when the rim sides are to steep. In that case the iron fine is pressed over the rims and due to elastic spring back after the rolling operation, the iron fine sticks to the roll surface (Fig. 23)

When the sides of the rims are less steep, the friction force between iron fine and roll after elastic spring back of the roll is to small and the iron fine does not stick to the roll.

For a round conical shaped rim, the ratio width on height should be at least 3 to avoid pick up of iron fine. This condition is realised by following beam parameters :
- beam focus point under the roll surface
- ratio of crater diameter on crater depth larger than 4.

### Solution to the problem of sticker marks during batch annealing.

During batch annealing the pressure between the windings is distributed over the many fine peaks of the Tandem EBT roughness. The contact pressure on one peak is large and it is very likely that a weld is formed at the top of the peak.

The diameter of the weld at the top of the peak is small (f.e. < 40 µm) and only very small forces are necessary to break the weld. This happens during the cooling of the material when the thermal stresses disappear. This elastic relaxation of the windings makes that the welds breaks and that no sticker marks are formed during decoiling of the material.

This mechanism remains true even for very low Ra-values as long as the peaks of the EBT cold reduction roughness are present. No sticker marks were observed for sheet with tandem roughness of 0.5 µm. Once the Ra decreases to 0.5 µm on the sheet, there are practically no peaks any more and sticker marks will not be formed.

### Solution for the adherence of galvannealed coated steel

A galvannealed layer is formed when Fe and Zn reacts during an annealing treatment after the hot dip of the sheet in liquid Zn. The surface area plays a very important role in this reaction :
1. the larger the roughness, the larger the specific contact area between Fe and Zn. The reactivity of the reaction increases. It is known that a very rapid reaction can lead to the so-called outburst of FeZn compounds out of the liquid Zn. Such a layer is unhomogeneous which leads to extensive weight loss of the coating during deepdrawing.
2. the larger the waviness, the larger are the thickness differences of the liquid Zn layer before annealing. The waviness can cause important differences : the average Zn thickness can change locally between 5 and 15 µm for an overall average thickness of 10 µm. There are two reasons why the FeZn reaction will start there where the liquid Zn is thinnest :
   1. the Al in the liquid Zn forms a layer between the Fe and the liquid Zn before reaction. This layer is an inhibitor for the FeZn reaction and helps to control the reaction. It was found that the Al preferentially deposits in the valleys where the liquid Zn thickness is large.
   2. as the thickness of the Zn is larger, it will take more time before the temperature of the Fe Zn interface has reached the value necessary to start the reaction.
   These differences in reaction kinetics, due to the waviness of the sheet, result also an unhomogeneous build up and weight loss during deepdrawing.

By the use of a deterministic cold reduction roughness a homogeneous build up of the Fe Zn compounds is possible. This reduces the weight loss of the coating during cup drawing to 30% of the value obtained with classical shot blast roughness (see Fig. 24).

The positive effect of the EBT cold reduction roughness comes from
1. smaller specific contact area for a same Ra-value
2. no waviness, so no local differences in reactivity
3. large amount of untouched flat sheet surface between the circular cavities on the steel sheet. Therefore, the ratio of the inner crater diameter versus crater distance on the roll should be smaller than 0.5.

The EBT cold reduction roughness reduces also the variation on the coating thickness. In figure 25 the mean thickness and variation on the thickness of material with shot blast roughness is compared to material with EBT texture. For a same overall coating weight, the more regular EBT texture reduces the variation to one third of the shot blast value.

### Solution to the problem of combining the EBT texture for cold reduction mill with the EBT texture for temper rolling.

The EBT cold reduction roughness can be combined a EBT textured rolls at the temper mill.

During temper rolling, the homogeneous pattern with the peaks of the same height (5 to 15 µm) is completely ironed out. However, the imprinted more or less circular valleys or indentations of the cold reduction roughness remain in the texture after temper rolling. As described above, during the temper rolling process only imprints of the roll rim are formed, no peaks are produced due to the low contact pressure during temper rolling.

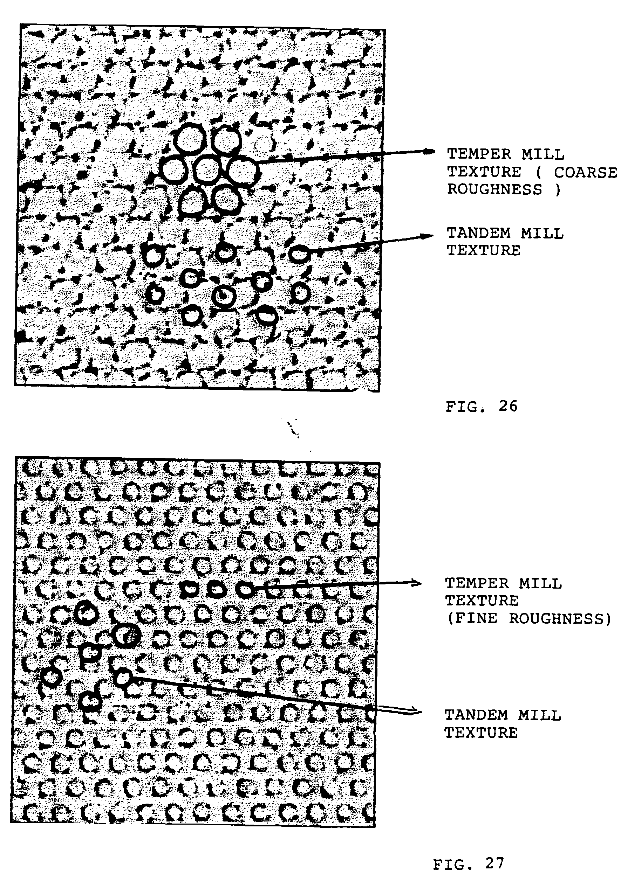

It is easy to make the temper mill valleys deeper. The low shearing forces during temper rolling make it possible to use rolls with high rims without risk to break off during rolling. The resulting texture is composed of a controlled mixture of shallow and deep circular valleys as shown in figures 26 and 27.

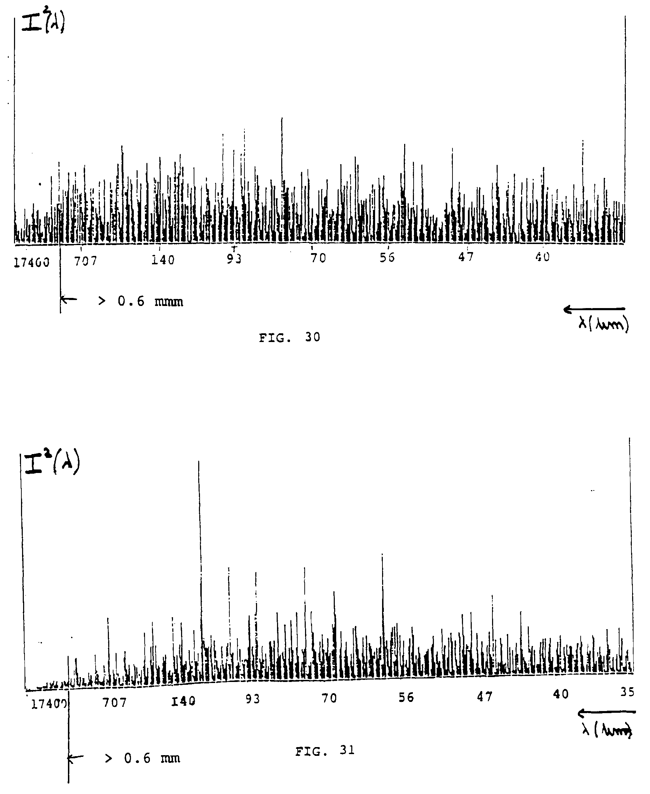

From this phenomenon three unique and unexpected advantages arise :
1. the final mixed sheet texture is absolutely predictable and reproducible. It is the first sheet texture where only fully deterministic rolls are used.
2. the contribution of the cold reduction mill roughness in the final sheet roughness is limited : as the peaks are ironed out and only shallow imprints of the rims remain, the contribution of the cold reduction mill in the final roughness is limited to 0.2 µm Ra. This low contribution facilitate the production of low final roughness values with small variation.
3. the mixture of two populations of valleys (a population of cold reduction mill and a population of the temper mill) results in specific advantages for the deep drawability. The lubrication oil is released gradually, when needed. The shallow valleys readily release the oil content (e.g. at small drawing ratios), whereas the deeper valleys retain the oil much longer, favouring high drawing ratios.
4. no waviness is present in the final texture, even at a high Ra values of i.e 2.5 µm. This is illustrated in the three dimensional texture measurements in figures 18 and 19 of a high and a low temper mill roughness pattern. Figures 30 and 31 compare the power spectrum of this new sheet texture with a texture where stochastic textured rolls at the cold reduction mill or the temper mill are used. The long wavelengths (> 0.6 mm) always appear strongly when stochastic rolls are used and are practically absent for the new sheet texture.

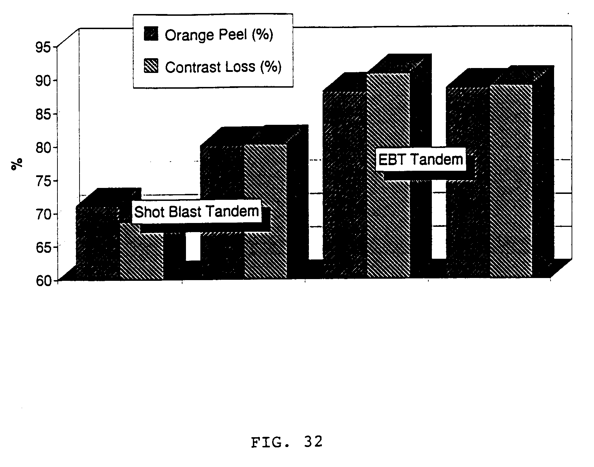

The absence of long wavelengths results in a significant increase of the paint appearance (see figure 32) and, even more important, this increase is independent of the Ra value of the sheet. With the present invention sheet with Ra up to 2.5 µm to favour the drawability and excellent paint appearance can be produced.

## Claims

1. Method of producing metal sheets or strips by cold reduction of a metal sheet or strip in a tandem mill or a reversible mill with at least one pair of work rolls, at least one of which being a textured work roll in order to transfer the surface pattern of the textured work roll to the surface of said sheet or strip, and wherein said pattern of the textured work roll consists in a bidimensional deterministic pattern of spots obtained through a high energy beam such as an electron beam wherein each spot has the form of a crater with a controllable rim around it, said spot being defined by the ratio width on height of the rim higher than 2, the distance between next two craters comprised between 50 and 500 µm, the inside diameter of the crater comprised between 20 and 250 µm, and the roughness of the textured work roll in the cold reduction mill comprised between 0.4 and 8.0 µm.

2. Method according to claim 1, characterised in that the roughness of the textured work roll in the cold reduction mill is in the range of 1.0 - 3.5 µm.

3. Method according to claim 1 or 2, characterised in that the ration width on height of the rim is at least 3.

4. Method according to claim 3, characterised in that the ratio crater diameter on crater depth is larger than 4.

5. Method according to anyone of the preceding claims, characterised in that the distance between two craters is comprised between 130 and 320 µm with a depth comprised between 8 and 30 µm.

6. Method according to anyone of the preceding claims, characterised in that the inside diameter of the crater is comprised between 50 and 180 µm although the width of the rim is in the range of 4 - 100 µm and preferably in the range of 10 - 75 µm and the height of the rim is in the range of 2 - 50 µm and preferably in the range of 5 - 35 µm.

7. Method according to anyone of the preceding claims, characterised in that the metal sheet or strip after cold reduction rolling is temper rolling with at least one pair of work rolls, at least one of which being a textured work roll in order to transfer the surface pattern of the textured work roll of the temper mill to the surface of said sheet or strip, said pattern of the work roll of the temper mill consisting in a bidimensional deterministic pattern of spots wherein each spot has the form of a crater with a rim around it.

8. Method according to claim 7, characterised in that the roughness of the textured work roll in the temper mills is in the range of 0.4 - 8.0 µm and preferably in the range of 1.6 - 6.0 µm.

9. Method according to anyone of the preceding claims, characterised in that both rolls of the pair of work rolls in the cold reduction mill and/or the temper mill are subjected to a texturing of the surface pattern which is a bidimensional deterministic pattern of spots.

10. Method according to anyone of the preceding claims, characterised in that the pattern configuration of the textured work roll in the cold reduction mill and/or the temper mill forms unit cells of spots preferably as regular centered hexagons.

11. Device for producing metal sheets or strips by cold reduction rolling comprising at least a tandem or reversible roll mill with at least one pair of work rolls, characterised in that at least one roll of the pair of work rolls in the tandem or reversible mill has a texture of surface pattern which consists in a bidimensional deterministic pattern of spots obtained through a high energy beam such as an electron beam, wherein each spot has the form of a crater with a rim around it, said spot being defined by the ration width on height of the rim higher than 2, the distance between next two craters comprised between 50 and 500 µm, the inside diameter of the crater comprised between 20 and 250 µm, and the roughness of the textured work roll in the cold reduction mill comprised between 0.4 and 8.0 µm.

12. Device according to claim 11, characterised in that the mill is a reversible mill comprising only one stand of work rolls performing several steps of the rolling operation, wherein the work rolls are changed before the last step of the reduction operation in textured work rolls of which at least one having a texture of a surface pattern which consists in a bidimensional deterministic pattern of spots.

13. Device according to claim 11, characterised in that the mill is a tandem mill comprising several stands and wherein only the last stand comprises at least one textured work roll having a texture of a surface pattern which consists in a bidimensional deterministic pattern of spots, the reduction operation being performed in one sequence.

14. Device according to anyone of the claims 11-13, characterised in that it comprises also a temper roll mill with at least one pair of work rolls wherein at least one roll of the pair of work rolls of the temper mill has a texture of a surface pattern which consists in a regular bidimensional deterministic pattern of spots, each spot having the form of a crater with a rim around it.

15. Device according to anyone of the claims 11-14, characterised in that both rolls of the pair of work rolls in the tandem or reversible mill and/or the temper mill are subjected to a texturing of the surface pattern which consists in a bidimensional deterministic pattern of spots.

16. Metal sheet or strip obtained by the method according to anyone of the claims 1-10 or with the device according to anyone of the claims 11-15 which has a texture of surface pattern which consists in a regular bidimensional deterministic pattern of spots, each spot having a form of an indentation surrounding a protuberance or peak and wherein the power spectrum measure on a profile has a power density for wavelength larger than 800 µm less than 0.2 µm².

17. Metal sheet or strip according to claim 16, characterised in that the elongation is less than 10% according to test Euronorm EN10002-1.

18. Metal sheet or strip according to claim 16 or 17, characterised in that the hardness is at least of 80 Rockwell B.

19. Metal sheet or strip according to anyone of the claims 16-18, characterised in that the roughness of the metal sheet or strip is comprised between 0.3 and 2.5 µm and preferably between 0.5 and 2.0 µm.

20. Metal sheet or strip according to anyone of the claims 16-19, characterised in that the ration width on depth of the indentation on the sheet or strip is at least 2 and preferably at least 3.

21. Metal sheet or strip according to claim 20, characterised in that the ration protuberance diameter on protuberance height is larger than 3 and preferably larger than 4.

22. Metal sheet or strip according to anyone of the claims 16-21, characterised in that the distance between two next protuberances or peaks is comprised between 50 and 550 µm and preferably between 130 and 320 µm with a height of the protuberance comprised between 0 and 30 µm.

23. Meal sheet or strip according to anyone of the claims 16-22, characterised in that the inside diameter of the indentation is comprised between 20 and 250 µm and preferably between 50 and 180 µm although the width of the indentation is in the range of 4 - 100 µm and preferably in the range of 10 - 75 µm and the depth of the indentation is in the range of 0 - 50 µm and preferably in the range of 5 - 30 µm.

24. Metal sheet or strip according to anyone of the claims 16-23, characterised in that it has no internal tension at the surface.

25. Metal sheet or strip according to anyone of the claims 16-24, characterised in that a stochastic roughness is covering partially the bidimensional deterministic pattern of spots.

26. Metal sheet or strip according to anyone of the claims 16-25, characterised in that a unideterministic roughness is covering partially the bidimensional deterministic pattern of spots.

27. Metal sheet or strip according to anyone of the claims 16-26, characterised in that it has a final mixed texture of two populations of textures having a surface pattern which consists in a bidimensional deterministic pattern of spots.

28. Use of the process according to anyone of the claims 1-10 or the device according to anyone of the claims 11-15 for texturing sheets or strips made of steel, stainless steel, aluminum or aluminum alloys.

29. Use of the process according to anyone of the claims 1-10 or the device according to anyone of the claims 11-15 for texturing sheets or strips which will be coated with a metallic or organic layer.

## Patentansprüche

1. Verfahren zum Herstellen von Metalltafeln oder Metallstreifen durch Kaltreduzierung einer Metalltafel oder eines Metallstreifens in einem Tandemwalzwerk oder einem umkehrbaren Walzwerk mit mindestens einem Arbeitswalzenpaar, bei dem mindestens eine der Arbeitswalzen texturiert ist, um das Oberflächenmuster der texturierten Arbeitswalze auf die Oberfläche der Tafel oder des Streifens zu übertragen, wobei das Muster der texturierten Arbeitswalze aus einem zweidimensionalen, determinierten Muster von Punkten besteht, die durch einen Hochenergiestrahl, wie einen Elektronenstrahl, erhalten werden, wobei jeder Punkt die Form eines Kraters mit einem steuerbaren Rand darum herum hat, der Punkt durch ein Verhältnis Breite zu Höhe des Randes größer als 2 definiert ist, der Abstand bis zu den nächsten zwei Kratern zwischen 50 und 500 µm liegt, der Innendurchmesser der Krater zwischen 20 und 250 µm liegt, und die Rauhigkeit der texturierten Arbeitswalze bei der Kaltreduzierung zwischen 0,4 und 8,0 µm liegt.

2. Verfahren gemäß Anspruch 1, dadurch gekennzeichnet, daß die Rauhigkeit der texturierten Arbeitswalze bei dem Kaltreduzierungs-Walzwerk in dem Bereich von 1,0 - 3,5 µm liegt.

3. Verfahren gemäß Anspruch 1 oder 2, dadurch gekennzeichnet, daß das Verhältnis Breite zu Höhe des Randes mindestens 3 beträgt.

4. Verfahren gemäß Anspruch 3, dadurch gekennzeichnet, daß das Verhältnis Kraterdurchmesser zu Kratertiefe größer als 4 ist.

5. Verfahren gemäß irgendeinem der vorhergehenden Ansprüche, dadurch gekennzeichnet, daß der Abstand zwischen zwei Kratern zwischen 130 und 320 µm liegt, bei einer Tiefe zwischen 8 und 30 µm.

6. Verfahren gemäß irgendeinem der vorhergehenden Ansprüche, dadurch gekennzeichnet, daß der Innendurchmesser der Krater zwischen 50 und 180 µm liegt, obwohl die Breite des Randes in dem Bereich von 4 - 100 µm, vorzugsweise in dem Bereich von 10 - 75 µm, liegt, und die Höhe des Randes in dem Bereich von 2 - 50 µm, vorzugsweise in dem Bereich von 5 - 35 µm, liegt.

7. Verfahren gemäß irgendeinem der vorhergehenden Ansprüche, dadurch gekennzeichnet, daß die Metalltafel oder der Metallstreifen nach dem Kaltreduzierungswalzen nachgewalzt wird mit mindestens einem Arbeitswalzenpaar, bei dem mindestens eine der Arbeitswalzen texturiert ist, um das Oberflächenmuster der texturierten Arbeitswalze des Nachwalzwerks auf die Oberfläche der Tafel oder des Streifens zu übertragen, wobei das Muster der Arbeitswalze des Nachwalzwerks aus einem zweidimensionalen, determinierten Muster von Punkten besteht, bei dem jeder Punkt die Form eines Kraters mit einem Rand darum herum hat.

8. Verfahren gemäß Anspruch 7, dadurch gekennzeichnet, daß die Rauhigkeit der texturierten Arbeitswalze bei den Nachwalzwerken in dem Bereich von 0,4 - 8,0 µm, vorzugsweise in dem Bereich von 1,6 - 6,0 µm, liegt.

9. Verfahren gemäß irgendeinem der vorhergehenden Ansprüche, dadurch gekennzeichnet, daß beide Walzen des Arbeitswalzenpaars bei dem Kaltreduzierungs-Walzwerk und/oder dem Nachwalzwerk einer Texturierung mit dem Oberflächenmuster unterworfen werden, das ein zweidimensionales, determiniertes Muster von Punkten ist.

10. Verfahren gemäß irgendeinem der vorhergehenden Ansprüche, dadurch gekennzeichnet, daß die Musterkonfiguration der texturierten Arbeitewalze bei dem Kaltreduzierungs-Walzwerk und/oder dem Nachwalzwerk Einheitszellen von Punkten vorzugsweise als gleichmäßige, zentrische Sechsecke bildet.

11. Vorrichtung zum Herstellen von Metalltafeln oder Metallstreifen durch Kaltreduzierungswalzen, die mindestens ein Tandemwalzwerk oder ein umkehrbares Walzwerk mit mindestens einem Arbeitswalzenpaar aufweist, dadurch gekennzeichnet, daß mindestens eine Walze des Arbeitswalzenpaars bei dem Tandemwalzwerk oder dem umkehrbaren Walzwerk eine Textur aus dem Oberflächenmuster hat, das aus einem zweidimensionalen, determinierten Muster von Punkten besteht, die durch einen Hochenergiestrahl, wie einen Elektronenstrahl, erhalten werden, wobei jeder Punkt die Form eines Kraters mit einem Rand darum herum hat, der Punkt durch ein Verhältnis Breite zu Höhe des Randes größer als 2 definiert ist, der Abstand bis zu den nächsten zwei Kratern zwischen 50 und 500 µm liegt, der Innendurchmesser der Krater zwischen 20 und 250 µm liegt, und die Rauhigkeit der texturierten Arbeitswalze bei dem Kaltreduzierungs-Walzwerk zwischen 0,4 und 8,0 µm liegt.

12. Vorrichtung gemäß Anspruch 11, dadurch gekennzeichnet, daß das Walzwerk ein umkehrbares Walzwerk ist, das nur ein Arbeitswalzen-Gerüst aufweist, das mehrere Schritte des Walzvorgangs ausführt, wobei die Arbeitswalzen vor dem letzten Schritt des Reduzierungsvorgangs gegen texturierte Arbeitswalzen ausgetauscht werden, von denen mindestens eine eine Textur aus einem Oberflächenmuster hat, das aus einem zweidimensionalen, determinierten Muster von Punkten besteht.

13. Vorrichtung gemäß Anspruch 11, dadurch gekennzeichnet, daß das Walzwerk ein Tandemwalzwerk ist, das mehrere Gerüste aufweist, wobei nur das letzte Gerüst mindestens eine texturierte Arbeitswalze aufweist, die eine Textur aus einem Oberflächenmuster hat, das aus einem zweidimensionalen, determinierten Muster von Punkten besteht, wobei der Reduzierungsvorgang in einer Sequenz ausgeführt wird.

14. Vorrichtung gemäß irgendeinem der Ansprüche 11-13, dadurch gekennzeichnet, daß sie auch ein Nachwalzwerk mit mindestens einem Arbeitswalzenpaar aufweist, wobei mindestens eine Walze des Arbeitswalzenpaars des Nachwalzwerks eine Textur aus einem Oberflächenmuster hat, das aus einem gleichmäßigen, zweidimensionalen, determinierten Muster von Punkten besteht, von denen jeder die Form eines Kraters mit einem Rand darum herum hat.

15. Vorrichtung gemäß irgendeinem der Ansprüche 11-14, dadurch gekennzeichnet, daß beide Walzen des Arbeitswalzenpaars bei dem Tandemwalzwerk oder dem umkehrbaren Walzwerk und/oder dem Nachwalzwerk einer Texturierung mit dem Oberflächenmuster unterworfen werden, das aus einem zweidimensionalen, determinierten Muster von Punkten besteht.

16. Metalltafel oder Metallstreifen, die durch das Verfahren gemäß irgendeinem der Ansprüche 1-10, oder mit der Vorrichtung gemäß irgendeinem der Ansprüche 11-15 erhalten werden, und die eine Textur aus dem Oberflächenmuster haben, das aus einem gleichmäßigen, zweidimensionalen, determinierten Muster von Punkten besteht, von denen jeder die Form einer Vertiefung hat, die einen Vorsprung oder eine Spitze umgibt, wobei das bei einem Profil gemessene Leistungsspektrum für eine Wellenlänge über 800 µm eine Leistungsdichte von weniger als 0,2 µm² hat.

17. Metalltafel oder Metallstreifen gemäß Anspruch 16, dadurch gekennzeichnet, daß die Dehnung bei dem Test gemäß der Euronorm EN10002-1 kleiner als 10% ist.

18. Metalltafel oder Metallstreifen gemäß Anspruch 16 oder 17, dadurch gekennzeichnet, daß die Härte mindestens 80 Rockwell B beträgt.

19. Metalltafel oder Metallstreifen gemäß irgendeinem der Ansprüche 16-18, dadurch gekennzeichnet, daß die Rauhigkeit der Metalltafel oder des Metallstreifens zwischen 0,3 und 2,5 µm, vorzugsweise zwischen 0,5 und 2,0 µm, liegt.

20. Metalltafel oder Metallstreifen gemäß irgendeinem der Ansprüche 16-19, dadurch gekennzeichnet, daß das Verhältnis Breite zu Tiefe der Vertiefung bei der Tafel oder dem Streifen mindestens 2, vorzugsweise mindestens 3, beträgt.

21. Metalltafel oder Metallstreifen gemäß Anspruch 20, dadurch gekennzeichnet, daß das Verhältnis Vorsprungdurchmesser zu Vorsprunghöhe größer als 3, vorzugsweise größer als 4, ist.

22. Metalltafel oder Metallstreifen gemäß irgendeinem der Ansprüche 16-21, dadurch gekennzeichnet, daß der Abstand zu den zwei nächsten Vorsprüngen oder Spitzen zwischen 50 und 550 µm, vorzugsweise zwischen 130 und 320 µm, liegt, bei einer Höhe der Vorsprünge zwischen 0 und 30 µm.

23. Metalltafel oder Metallstreifen gemäß irgendeinem der Ansprüche 16-22, dadurch gekennzeichnet, daß der Innendurchmesser der Vertiefung zwischen 20 und 250 µm, vorzugsweise zwischen 50 und 180 µm, liegt, obwohl die Breite der Vertiefung in dem Bereich von 4 - 100 µm, vorzugsweise in dem Bereich von 10 - 75 µm, liegt, und die Tiefe der Vertiefung in dem Bereich von 0 - 50 µm, vorzugsweise in dem Bereich von 5 - 30 µm, liegt.

24. Metalltafel oder Metallstreifen gemäß irgendeinem der Ansprüche 16-23, dadurch gekennzeichnet, daß sie keine innere Spannung an der Oberfläche haben.

25. Metalltafel oder Metallstreifen gemäß irgendeinem der Ansprüche 16-24, dadurch gekennzeichnet, daß eine stochastische Rauhigkeit das zweidimensionale, determinierte Muster von Punkten teilweise bedeckt.

26. Metalltafel oder Metallstreifen gemäß irgendeinem der Ansprüche 16-25, dadurch gekennzeichnet, daß eine uni-determinierte Rauhigkeit das zweidimensionale, determinierte Muster von Punkten teilweise bedeckt.

27. Metalltafel oder Metallstreifen gemäß irgendeinem der Ansprüche 16-26, dadurch gekennzeichnet, daß sie eine endgültige gemischte Textur aus zwei Populationen von Texturen haben, die ein Oberflächenmuster haben, das aus einem zweidimensionalen, determinierten Muster von Punkten besteht.

28. Verwendung des Prozesses gemäß irgendeinem der Ansprüche 1-10, oder der Vorrichtung gemäß irgendeinem der Ansprüche 11-15 zum Texturieren von Tafeln oder Streifen aus Stahl, rostfreiem Stahl, Aluminium oder Aluminiumlegierungen.

29. Verwendung des Prozesses gemäß irgendeinem der Ansprüche 1-10, oder der Vorrichtung gemäß irgendeinem der Ansprüche 11-15 zum Texturieren von Tafeln oder Streifen, die danach mit einer metallischen oder organischen Schicht beschichtet werden.

## Revendications

1. Procédé de production de feuilles ou de bandes métalliques par laminage à froid d'une feuille ou d'une bande métallique dans un laminoir tandem ou un laminoir réversible ayant au moins une paire de cylindres de travail, dont l'un au moins est un cylindre de travail texturé afin de transférer le motif superficiel du cylindre de travail texturé sur la surface de ladite feuille ou bande, et dans lequel ledit motif du cylindre de travail texturé consiste en un motif déterministe bidimensionnel de points obtenu avec un faisceau de haute énergie, tel qu'un faisceau d'électrons, dans lequel chaque point a la forme d'un cratère entouré d'un bord réglable, ledit point étant défini par un rapport de la largeur à la hauteur du bord supérieur à 2, la distance entre deux cratères adjacents étant comprise entre 50 µm et 500 µm, le diamètre interne du cratère étant compris entre 20 µm et 250 µm, et la rugosité du cylindre de travail texturé dans le laminoir à froid étant comprise entre 0,4 µm et 8,0 µm.

2. Procédé selon la revendication 1, caractérisé en ce que la rugosité du cylindre de travail texturé dans le laminoir à froid se situe dans la plage de 1,0-3,5 µm.

3. Procédé selon la revendication 1 ou 2, caractérisé en ce que le rapport de la largeur à la hauteur du bord est au moins de 3.

4. Procédé selon la revendication 3, caractérisé en ce que le rapport du diamètre du cratère à la profondeur du cratère est supérieur à 4.

5. Procédé selon l'une quelconque des revendications précédentes, caractérisé en ce que la distance entre deux cratères est comprise entre 130 µm et 320 µm avec une profondeur comprise entre 8 µm et 30 µm.

6. Procédé selon l'une quelconque des revendications précédentes, caractérisé en ce que le diamètre interne du cratère est compris entre 50 µm et 180 µm, tandis que la largeur du bord se situe dans la plage de 4-100 µm, de préférence dans la plage de 10-75 µm, et que la hauteur du bord se situe dans la plage de 2-50 µm, de préférence dans la plage de 5-35 µm.

7. Procédé selon l'une quelconque des revendications précédentes, caractérisé en ce que la feuille ou la bande métallique, après laminage à froid, est écrouie par au moins une paire de cylindres de travail, dont l'un au moins est un cylindre de travail texturé afin de transférer le motif superficiel du cylindre de travail texturé du laminoir d'écrouissage sur la surface de ladite feuille ou bande, ledit motif du cylindre de travail texturé du laminoir d'écrouissage consistant en un motif déterministe bidimensionnel de points, dans lequel chaque point a la forme d'un cratère entouré d'un bord.

8. Procédé selon la revendication 7, caractérisé en ce que la rugosité du cylindre de travail texturé du laminoir d'écrouissage se situe dans la plage de 0,4-8,0 µm, de préférence dans la plage de 1,6-6,0 µm.

9. Procédé selon l'une quelconque des revendications précédentes, caractérisé en ce que les deux cylindres de la paire de cylindres de travail du laminoir à froid et/ou du laminoir d'écrouissage sont soumis à une texturation par un motif superficiel qui est un motif déterministe bidimensionnel de points.

10. Procédé selon l'une quelconque des revendications précédentes, caractérisé en ce que la configuration du motif du cylindre de travail texturé du laminoir à froid et/ou du laminoir d'écrouissage forme des cellules unitaires de points, de préférence sous la forme d'hexagones réguliers centrés.

11. Dispositif de production de feuilles ou de bandes métalliques par laminage à froid qui comprend au moins un laminoir tandem ou réversible ayant au moins une paire de cylindres de travail, caractérisé en ce qu'au moins un cylindre de la paire de cylindres de travail du laminoir tandem ou réversible a une texture formée d'un motif superficiel qui consiste en un motif déterministe bidimensionnel de points obtenu par un faisceau de haute énergie tel qu'un faisceau d'électrons, dans lequel chaque point a la forme d'un cratère entouré d'un bord, ledit point étant défini par un rapport de la largeur à la hauteur du bord supérieur à 2, la distance entre deux cratères adjacents étant comprise entre 50 µm et 500 µm, le diamètre interne du cratère étant compris entre 20 µm et 250 µm, et la rugosité du cylindre de travail texturé du laminoir à froid étant comprise entre 0,4 µm et 8,0 µm.

12. Dispositif selon la revendication 11, caractérisé en ce que le laminoir est un laminoir réversible qui ne comprend qu'une seule cage de cylindres de travail effectuant plusieurs étapes de l'opération de laminage, dans lequel les cylindres de travail sont remplacés, avant la dernière étape de l'opération de laminage, par des cylindres de travail texturés dont l'un au moins a une texture formée d'un motif superficiel qui consiste en un motif déterministe bidimensionnel de points.

13. Dispositif selon la revendication 11, caractérisé en ce que le laminoir est un laminoir tandem qui comprend plusieurs cages et dans lequel seule la dernière cage comprend au moins un cylindre de travail texturé qui a une texture formée d'un motif superficiel qui consiste en un motif déterministe bidimensionnel de points, l'opération de laminage étant réalisée en une seule séquence.

14. Dispositif selon l'une quelconque des revendications 11-13, caractérisé en ce qu'il comprend également un laminoir d'écrouissage ayant au moins une paire de cylindres de travail, dans lequel au moins un cylindre de la paire de cylindres de travail du laminoir d'écrouissage a une texture formée d'un motif superficiel qui consiste en un motif déterministe bidimensionnel de points dans lequel chaque point a la forme d'un cratère entouré d'un bord.

15. Dispositif selon l'une quelconque des revendications 11-14, caractérisé en ce que les deux cylindres de la paire de cylindres de travail du laminoir tandem ou réversible et/ou du laminoir d'écrouissage sont soumis à une texturation par un motif superficiel qui consiste en un motif déterministe bidimensionnel de points.

16. Feuille ou bande métallique obtenue par le procédé selon l'une quelconque des revendications 1-10 ou avec le dispositif selon l'une quelconque des revendications 11-15, qui a une texture formée d'un motif superficiel qui consiste en un motif déterministe bidimensionnel de points, chaque point ayant la forme d'une indentation entourant une protubérance ou crête, et dans laquelle la mesure du spectre d'énergie sur un profil a une densité d'énergie, pour une longueur d'onde supérieure à 800 µm, inférieure à 0,2 µm².

17. Feuille ou bande métallique selon la revendication 16, caractérisée en ce que l'allongement est inférieur à 10% selon l'Euronorme d'essai EN10002-1.

18. Feuille ou bande métallique selon la revendication 16 ou 17, caractérisée en ce que la dureté est au moins de 80 Rockwell B.

19. Feuille ou bande métallique selon l'une quelconque des revendications 16-18, caractérisée en ce que la rugosité de la feuille ou bande métallique est comprise entre 0,3 µm et 2,5 µm, de préférence entre 0,5 µm et 2,0 µm.

20. Feuille ou bande métallique selon l'une quelconque des revendications 16-19, caractérisée en ce que le rapport de la largeur à la hauteur de l'indentation sur la feuille ou bande est au moins de 2, de préférence au moins de 3.

21. Feuille ou bande métallique selon la revendication 20, caractérisée en ce que le rapport du diamètre de la protubérance à la hauteur de la protubérance est supérieur à 3, de préférence supérieur à 4.

22. Feuille ou bande métallique selon l'une quelconque des revendications 16-21, caractérisée en ce que la distance entre deux protubérances ou crêtes adjacentes est comprise entre 50 µm et 550 µm, de préférence entre 130 µm et 320 µm avec une hauteur de la protubérance comprise entre 0 et 30 µm.

23. Feuille ou bande métallique selon l'une quelconque des revendications 16-22, caractérisée en ce que le diamètre interne de l'indentation est compris entre 20 µm et 250 µm, de préférence entre 50 µm et 180 µm, tandis que la largeur de l'indentation se situe dans la plage de 4-100 µm, de préférence dans la plage de 10-75 µm, et que la profondeur de l'indentation se situe dans la plage de 0-50 µm, de préférence dans la plage de 5-30 µm.

24. Feuille ou bande métallique selon l'une quelconque des revendications 16-23, caractérisée en ce qu'elle n'a pas de tension interne en surface.

25. Feuille ou bande métallique selon l'une quelconque des revendications 16-24, caractérisée en ce qu'une rugosité stochastique recouvre partiellement le motif déterministe bidimensionnel de points.

26. Feuille ou bande métallique selon l'une quelconque des revendications 16-25, caractérisée en ce qu'une rugosité unidéterministe recouvre partiellement le motif déterministe bidimensionnel de points.

27. Feuille ou bande métallique selon l'une quelconque des revendications 16-26, caractérisée en ce qu'elle a une texture finale mixte de deux populations de textures ayant un motif superficiel qui consiste en un motif déterministe bidimensionnel de points.

28. Utilisation du procédé selon l'une quelconque des revendications 1-10 ou du dispositif selon l'une quelconque des revendications 11-15 pour texturer des feuilles ou des bandes en acier, en acier inoxydable, en aluminium ou en alliages d'aluminium.

29. Utilisation du procédé selon l'une quelconque des revendications 1-10 ou du dispositif selon l'une quelconque des revendications 11-15 pour texturer des feuilles ou des bandes qui seront revêtues d'une couche métallique ou organique.
